# FASCICULE DE BREVET EUROPEEN

(11) **EP 1 762 916 B1**
(45) Date de publication et mention de la délivrance du brevet: **03.12.2008**
(21) Numéro de dépôt: 05108397.0
(22) Date de dépôt: 13.09.2005
(51) Int. Cl.: G05B 19/404

(54) **Perfectionnement à un procédé de commande d'organes moteurs sur une machine-outil**
Verbesserung des Verfahrens zur Steuerung von Antriebteilen einer Werkzeugmaschine
Improvement to a method for controlling drive elements on a machine tool

(43) Date de publication de la demande: 14.03.2007
(73) Titulaire: Tornos SA, 2740 Moutier (CH)
(72) Inventeur: Paroz, Cédric, 2732 Saicourt (CH); Wyss, Marc, 1997 Haute-Nendaz (CH); Vuilleumier, Michel, 2720 Tramelan (CH)
(74) Mandataire: BOVARD AG

(56) Documents cités:
- EP-A- 0 543 034
- EP-A- 1 471 404
- US-A- 5 019 763
- US-A- 5 600 221

## Description

L'invention concerne un perfectionnement à un procédé de commande d'organes moteurs sur une machine-outil qui met en oeuvre de tels organes moteurs.

L'invention intéresse plus particulièrement mais non exclusivement le domaine des machines-outils de décolletage.

L'invention se rapporte également à un dispositif de commande pour la mise en oeuvre du procédé précité et aux machines-outils comportant ce dispositif de commande.

Egalement, l'invention se rapporte aussi :
- à un logiciel pour la mise en oeuvre du procédé,
- à un support de stockage sur lequel est enregistré le logiciel comprenant les étapes du procédé.

Une machine-outil comprend au moins un poste d'usinage qui permet l'usinage d'au moins une pièce ayant un profil déterminé.

L'invention s'applique avantageusement aux machines-outils qui répètent la même opération plusieurs fois, que ce soit sur un même poste, par exemple dans le cas d'un usinage répété plusieurs fois sur la même pièce, ou dans le cas où cet usinage est effectué sur différents postes que la machine-outil comprend.

Au niveau de chaque poste d'usinage, une telle machine-outil comprend,
- d'une part, au moins un premier élément capable d'agir sur la pièce à usiner, tel un outil d'usinage ou un groupe d'outils d'usinage, ce premier élément étant supporté par au moins un second élément mobile par rapport à au moins un axe déterminé auquel il est associé, c'est-à-dire mobile autour de cet axe ou suivant cet axe déterminé et,
- d'autre part, au moins un organe moteur capable de déplacer chaque second élément selon chaque axe auquel il est associé de manière à engendrer le déplacement du premier élément.

Les organes moteurs de la machine-outil sont commandés par un dispositif de commande qui exploite un plan de commande préétabli, c'est-à-dire élaboré préalablement à l'usinage, et ce, en fonction des caractéristiques de profil de la pièce à réaliser.

La machine-outil comprend un dispositif de commande qui exploite un plan de commande qui a été préalablement construit et sous l'influence duquel elle est capable de réaliser au moins une opération d'usinage et, classiquement, une pluralité d'opérations d'usinage.

La construction du plan de commande est effectuée par inscription sur un support de mémorisation, d'informations qui constituent des instructions utilisables par le dispositif de commande pour commander au moins un organe moteur approprié.

Plus précisément, un procédé de commande d'une machine-outil du type précité met en oeuvre au moins une table des pas préalablement établie en fonction du profil de la pièce à usiner.

Chaque table des pas qui, associée à au moins un organe moteur déterminé destiné à assurer un déplacement selon un axe également déterminé, peut être représentée sous la forme d'une première grille définie par deux groupes de lignes entrecroisées, constituant :
- une première rangée de cases juxtaposées chacune attribuée à au moins un instant élémentaire de commande du déplacement incrémental de l'organe moteur concerné, et
- une seconde rangée de cases juxtaposées chacune attribuée à une première valeur de déplacement incrémental qui doit être imposée à l'organe moteur 6, à partir de l'instant élémentaire indiqué dans la case de la première rangée qui est juxtaposée, chaque première valeur de déplacement incrémental étant prédéterminée en fonction du profil de la pièce à usiner.

Il s'avère que certains des premiers éléments plus avant évoqués sont susceptibles de requérir au moins une correction de position.

Par exemple, cette correction de position est nécessaire du fait d'une usure du premier élément ou du fait d'une dilatation thermique du second élément qui porte ledit premier élément.

Avantageusement, le dispositif de commande comprend une fonctionnalité qui permet de corriger le contenu d'un ensemble d'instructions définissant une opération d'usinage, plus particulièrement mais non exclusivement de manière à tenir compte d'une usure d'outil ou d'une variation de température qui affecte la position de cet outil.

Les brevets EP-A-1 471 404, EP-A-0474603 et EP-A0543034 décrivent des procédés de commande et des dispositifs de commande qui autorisent la correction des valeurs des déplacements incrémentaux qui sont imposées aux organes moteurs.

Un résultat que l'invention vise à obtenir est un perfectionnement à un procédé de commande d'une machine-outil qui permet d'accroître les possibilités d'intervention d'un opérateur pour l'application de corrections.

Un autre résultat que l'invention vise à obtenir est un perfectionnement à un procédé de commande d'une machine-outil qui permet d'automatiser, d'une manière fiable, l'application de corrections.

A cet effet, l'invention a pour objet un perfectionnement à un procédé de commande d'une machine-outil, notamment, selon la revendication 1.

L'invention a également pour objet un dispositif de commande pour la mise en oeuvre du procédé et les machines-outils comportant ce dispositif de commande.

Egalement, l'invention concerne :
- un logiciel pour la mise en oeuvre du procédé,
- un support de stockage sur lequel est enregistré le logiciel comprenant les étapes du procédé.

L'invention sera bien comprise à la lecture de la description ci-après faite à titre d'exemple non limitatif en regard du dessin ci-annexé qui représente,

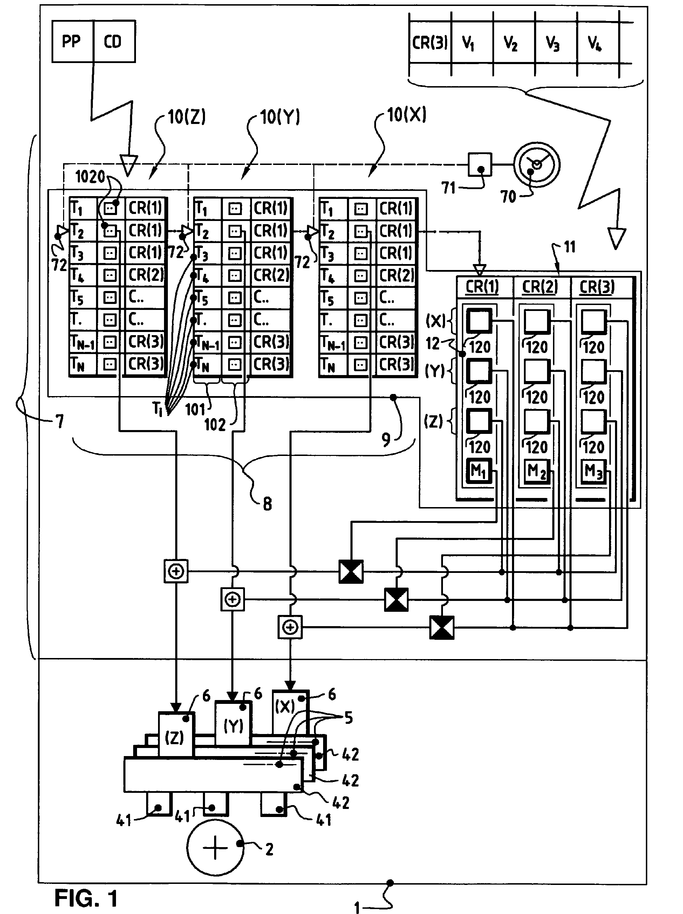

- figure 1, sous forme de blocs fonctionnels, une machine-outil équipée d'un dispositif qui met en oeuvre le procédé selon l'invention,

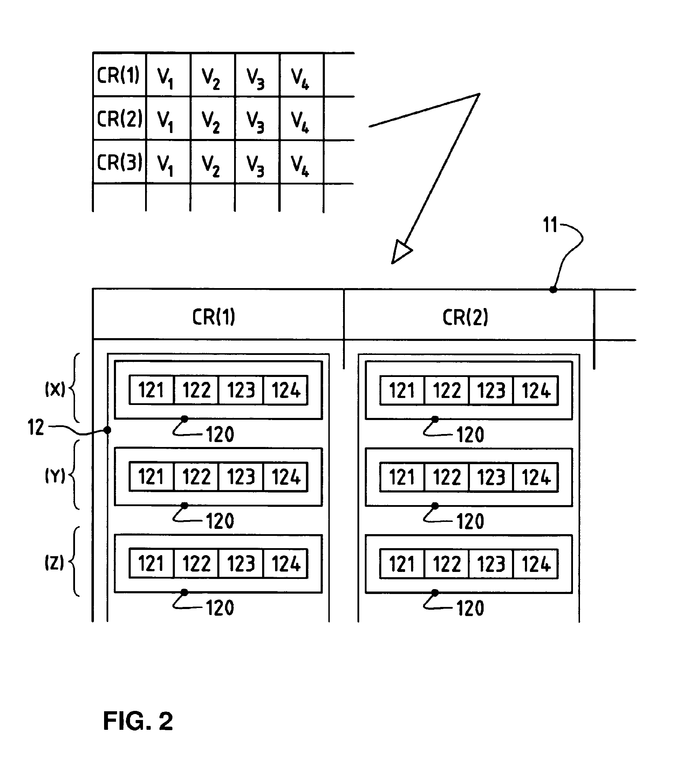

- figure 2, à plus grande échelle, un détail de la figure 1.

En se reportant au dessin, on voit une machine-outil 1 qui permet la réalisation d'au moins une pièce 2.

De préférence, la machine-outil 1 qui permet la réalisation d'une pluralité de pièces 2.

Bien que cela n'apparaisse pas de manière flagrante sur le dessin, on considérera que les pièces sont identiques entre elles.

Bien que cela ne soit pas représenté, à titre d'exemple non limitatif, la machine-outil 1 est une machine dite multipostes, c'est-à-dire une machine-outil 1 qui comprend plusieurs postes d'usinage au niveau de chacun desquels au moins une opération d'usinage peut être réalisée.

Tel que cela a été indiqué plus avant, le procédé selon l'invention ne s'applique pas uniquement à ce type de machine-outil 1.

Notamment au niveau de chaque poste d'usinage, une telle machine-outil 1 comprend,
- d'une part, au moins un premier élément 41 capable d'agir sur la pièce 2 à usiner, tel un outil d'usinage ou un groupe d'outils d'usinage, ce premier élément 41 étant supporté par au moins un second élément 42 mobile par rapport à au moins un axe 5 déterminé auquel il est associé, c'est-à-dire mobile autour de cet axe 5 ou suivant cet axe 5 déterminé et,
- d'autre part, au moins un organe moteur 6 capable de déplacer chaque second élément 42 selon chaque axe 5 auquel il est associé de manière à engendrer le déplacement du premier élément 41.

Les seconds éléments 42 déplacés par les organes moteurs 6 peuvent être de tout type.

Il peut s'agir de chariots porte-outils, de broches...

Ces seconds éléments 42 n'ont pas été représentés en détails.

La machine-outil 1 met en oeuvre au moins un premier élément 41 consistant en un outil d'usinage (non représenté) et, classiquement, une pluralité de premiers éléments 41 consistant en des outils d'usinage.

La machine-outil peut également mettre en oeuvre des premiers éléments 41 qui consistent en des ensembles plus ou moins complexes d'outils d'usinage.

La machine-outil comprend un dispositif de commande 7 sous l'influence duquel elle est capable de réaliser au moins une opération d'usinage et, classiquement, une pluralité d'opérations d'usinage.

On note qu'un dispositif de commande 7 est associé à la machine-outil 1 et que ce dispositif de commande 7 exploite un plan de commande 8 qui a été préalablement construit.

Précisément, pour commander les organes moteurs 6, le dispositif de commande 7 exploite un plan de commande 8 préétabli, c'est-à-dire élaboré préalablement à l'usinage, et ce, en fonction des caractéristiques de profil de la pièce 2 à réaliser.

La construction du plan de commande 8 a été effectuée par inscription sur un support de mémorisation 9 d'informations qui constituent des instructions utilisables par le dispositif de commande 7 pour commander au moins un organe moteur 6 approprié.

Les premiers éléments 41, ainsi que les opérations d'usinage sont choisis, en général par l'opérateur.

De préférence, mais de manière non obligatoire, le choix des premiers éléments 41 lorsqu'ils sont constitués par des outils, est effectué dans un catalogue d'outils d'usinage et le choix des opérations d'usinage est effectué dans un catalogue d'opérations d'usinage.

De préférence, ces catalogues sont mémorisés dans le dispositif de commande 7.

Le dispositif de commande 7 comprend notamment un ordinateur (non représenté) utilisé notamment pour commander les organes moteurs en fonction du plan de commande 8.

Plus précisément, un procédé de commande d'une machine-outil 1 du type précité met en oeuvre au moins une table des pas 10 préalablement établie en fonction du profil de la pièce 2 à usiner.

Classiquement, un procédé de commande met en oeuvre une pluralité de tables des pas 10.

Sur le dessin, à titre d'exemple, on a représenté un ensemble de trois seconds éléments 42 qui sont chacun mobile selon un axe 5, chacun sous l'effet d'un organe moteur 6.

A chacun des organes moteurs 6 a été associé l'une des trois lettres X, Y et Z (chaque lettre apparaît entre parenthèses dans le bloc fonctionnel qui représente un organe moteur).

Chaque organe moteur 6 reçoit des instructions d'une table des pas 10 à laquelle les trois lettres X, Y et Z ont également été associées (Chaque lettre apparaît entre parenthèses à coté du repère "10" désignant la table des pas qui est concernée).

Chaque table des pas 10 qui, associée à au moins un organe moteur 6 déterminé destiné à assurer un déplacement selon un axe 5 également déterminé, peut être représentée sous la forme d'une première grille définie par deux groupes de lignes entrecroisées, constituant :
- une première rangée 101 de cases juxtaposées chacune attribuée à au moins un instant élémentaire Ti de commande du déplacement incrémental de l'organe moteur 6 concerné, et
- une seconde rangée 102 de cases juxtaposées chacune attribuée à une première consigne de déplacement incrémental 1020, dite première consigne 1020 qui doit être imposée à l'organe moteur 6, à partir de l'instant élémentaire Ti indiqué dans la case de la première rangée 101 qui est juxtaposée, la valeur de chaque première consigne 1020 étant prédéterminée en fonction du profil "PP" de la pièce 2 à usiner et des caractéristiques dynamiques "CD" de la machine-outil 1.

Par caractéristiques dynamiques "CD" de la machine-outil, l'homme de l'art désigne au moins l'une des caractéristiques que sont les caractéristiques d'accélération, de jerk ou de contenu fréquentiel.

Ces caractéristiques doivent être représentatives des possibilités mécaniques de la machine, à savoir, notamment :
- des possibilités des régulateurs (PID, RST, compensation de l'erreur de poursuite, amortissements dynamique, etc.) des moteurs (vitesse maximale, couple, inertie, etc),
- des contraintes de la chaîne cinématique (rapports de réduction, frottements, rendement, inertie additionnelle, limites géométriques, etc),
- du comportement de la machine (modes vibratoires, isolation du sol, amortissements, etc.).

Sur le dessin, les différents instants élémentaires Ti contenus dans les tables des pas 10, prennent la valeur T1, T2, T3, T4, T5 et, TN-1 TN.

La lecture du contenu de chaque table des pas 10 s'effectue par exemple sous le contrôle d'une horloge 70 et d'un compteur 71.

Pour la compréhension, on peut considérer que les organes fonctionnels que sont l'horloge 70 et le compteur 71 déplacent un pointeur 72 devant chaque groupe de deux cases des deux rangées (première et seconde) 101, 102 case, en vue de la lecture de la consigne 1020.

On sait que certains des premiers éléments 41 sont susceptibles de requérir au moins une correction de position.

Il peut également s'agir d'une correction de vitesse.

Par exemple, cette correction de position est nécessaire du fait d'une usure du premier élément 41 ou du fait d'une dilatation thermique du second élément 42 qui porte ledit premier élément 41.

On considérera que la machine-outil comprend au moins un premier élément 41 dont la position peut être affectée sur trois axes 5, repérés "X", "Y" et "Z".

Selon le procédé :
- au cours d'un premier groupe d'étapes opératoires,
   . on créé un code de référence CR pour chaque premier élément 41, ce code de référence CR étant spécifique à chaque premier élément 41 de manière à permettre la distinction des premiers éléments 41 entre eux par la lecture de ce code de référence CR,
   . on constitue un registre de correction 11 dans lequel, à chaque code de référence CR d'un premier élément 41, on associe au moins un groupe 12 d'informations dont au moins certaines,
      .. d'une part, constituent des consignes, dites deuxièmes consignes 120, chacune de correction du déplacement incrémental d'un organe moteur 6 affecté au déplacement du premier élément 41 considéré, en prenant en compte le fait qu'une correction du déplacement incrémental consiste en au moins l'une des deux corrections que sont une correction de vitesse et une correction de position, et,
      .. d'autre part, sont chacune composite à savoir constituée d'au moins une composante 121, 122, 123, 124 ayant chacune une valeur qui est ajustable indépendamment du profil de la pièce 2, la somme de ces composantes 121, 122, 123, 124 constituant la valeur totale de correction de la deuxième consigne 120 concernée,
   . on recherche les tables des pas 10 dont la lecture génère le déplacement d'au moins un premier élément 41, et à chaque instant élémentaire Ti de déplacement de chaque table des pas 10 qui implique un tel premier élément 41, on associe le code de référence CR spécifique à ce premier élément 41,
- au cours d'un second groupe d'étapes opératoires,
   . lors d'une étape préparatoire située au plus tard juste avant la lecture des tables des pas 10 par le dispositif de commande 7, on choisit et on ajuste la valeur d'au moins une composante 121, 122, 123, 124 d'une deuxième consigne 120 associée à un premier élément 41 concerné par au moins l'une de ces tables des pas 10 et identifiable par son code de référence CR, et
   . lors de la lecture de chaque table des pas 10 par ledit dispositif de commande 7, à chaque instant élémentaire Ti de ladite table de pas 10, on contraint le dispositif de commande 7,
      .. d'une part, à vérifier la présence d'un code de référence CR associé à cet instant élémentaire Ti et, lorsqu'un tel code de référence CR est détecté, à consulter le registre de correction 11 associé à ce code de référence CR pour connaître la valeur d'au moins une composante 121, 122, 123, 124 de la deuxième consigne 120 qui a été prévue,
      .. d'autre part, à déterminer une valeur totale de déplacement incrémental à imposer à l'organe moteur 6 concerné, et ce, en additionnant,
         ... la valeur de la première consigne 1020 qui a été programmée à l'instant élémentaire Ti considéré, et
         ... au moins une fraction prédéterminée M de la valeur d'au moins une composante 121, 122, 123, 124 de la deuxième consigne 120.

Par correction du déplacement incrémental on désigne au moins l'une des deux corrections que sont une correction de vitesse et une correction de position.

En tant que composantes 121, 122, 123, 124 de la deuxième consigne 120, on considère une variation d'au moins l'une des variables V1, V2, V3, V4 que sont :
- (V1) la position de l'arête de coupe de l'outil,
- (V2) la position des faces de coupe de l'outil,
- (V3) la position de l'outil sur un support d'outil,
- (V4) la position du support d'outil sur un dispositif de déplacement qui le porte.

En tant que variables, l'homme de l'art considérera assurément les variables liées à :
- la géométrie des systèmes d'outils (par exemple, le fait que le premier élément 41, tel le porte-outil, est un "peigne" d'outils ou une tourelle portant plusieurs outils),
- la géométrie du porte outil,
- la géométrie de l'outil,
- la géométrie de l'arrête de coupe théorique,
- la géométrie de l'arrête de coupe réelle (appelée aussi usure),
- la géométrie des systèmes d'axes (aussi empilables),
- la géométrie de la broche,
- la géométrie de la pince porte-pièce,
- la position théorique de la pièce,
- le décalage d'origine...

L'expression géométrie englobe au moins l'une des notions que sont :
- la position d'au moins un point d'un premier organe dans un repère tridimensionnel associé à ce premier organe,
- la position d'au moins un premier organe dans un repère tridimensionnel associé à un second organe porteur dudit premier organe.

Pour calculer la valeur de chaque consigne 120, on procède par addition des différentes composantes 121, 122, 123, 124 qui la constituent.

A titre d'exemple la machine-outil 1 met en oeuvre trois premiers éléments 41, notamment trois outils.

Chacun de ces trois premiers éléments 41 porte un code de référence CR auquel on a associé (entre parenthèses) un chiffre de un à trois).

A titre d'exemple, on a représenté un registre de correction 11 qui concerne trois premiers éléments 41, tels des outils d'usinage.

Un code de référence CR, complémenté par les chiffres un à trois, a donc été reporté dans le registre de correction 11.

Dans le registre de correction 11, on retrouve un groupe d'informations 12 consistant en des deuxièmes consignes 120, chacune de correction du déplacement incrémental d'un organe moteur 6 affecté au déplacement d'un des trois premiers éléments 41 considérés.

Pour les trois premiers éléments 41, on retrouve un code de référence CR(1), CR(2), CR(3) et, associés, trois groupes d'informations 12.

Chaque groupe d'informations 12 regroupe au moins trois deuxièmes consignes 120.

De manière avantageuse, mais non limitative, le registre de correction 11 est enregistré sur le même support 9 que le plan de commande 8.

Selon le procédé de l'invention, on commence par, au cours du premier groupe d'étapes opératoires, rechercher les premiers éléments 41 qui sont susceptibles de requérir une correction de déplacement incrémental selon au moins un axe, et ensuite, on limite les autres étapes opératoires à ceux des premiers éléments 41 qui sont susceptibles de requérir une telle correction de déplacement incrémental.

Cette manière de procéder permet en quelque sorte, d'accélérer le traitement des informations.

Pour choisir la valeur d'au moins une composante 121, 122, 123, 124 d'une deuxième consigne 120 associée à un premier élément 41 concerné par au moins l'une des tables des pas 10, suivant une première manière, on effectue des relevés au cours d'un cycle de fonctionnement de la machine-outil 1, on choisit ladite valeur d'au moins une composante 121, 122, 123, 124 de deuxième consigne 120 à inscrire dans le registre de corrections et on inscrit cette valeur dans le dit registre.

Pour choisir la valeur d'au moins une composante 121, 122, 123, 124 d'une deuxième consigne 120 associée à un premier élément 41 concerné par au moins l'une des tables des pas 10, d'une autre manière, on réalise des essais préalables de fonctionnement de la machine-outil 1, on choisit ladite valeur d'au moins une composante 121, 122, 123, 124 de deuxième consigne 120 à inscrire dans le registre de corrections et on inscrit cette valeur dans le dit registre.

Le registre de correction est établi pour les différents axes 5 selon lesquels les premiers éléments 41 sont actifs.

Par exemple, sur le dessin, trois axes "X", "Y" et "Z" ont été représentés.

D'une manière remarquable :
- au plus tard préalablement à l'utilisation de chaque deuxième consigne 120 destinée à être appliquée à un organe moteur 6 en vue d'effectuer une correction de position,
   . on compare la valeur totale de correction à un seuil prédéterminé de déplacement jugé acceptable pour l'organe moteur 6 concerné et,
   . lorsque la valeur totale de correction d'une deuxième consigne 120 dépasse ledit seuil acceptable prédéterminé, on définit un coefficient modérateur M pour la modération de l'application de cette deuxième consigne 120 par fraction de sa valeur totale de correction, à différents instants élémentaires Ti successifs,
   . on associe ce coefficient de modération M au moins à ladite deuxième consigne 120,
- préalablement à l'utilisation de chaque deuxième consigne 120, on vérifie si elle est associée à un coefficient de modération M et, dans l'affirmative, on utilise le coefficient de modération M pour appliquer la valeur totale de correction de ladite deuxième consigne 120 à l'organe moteur 6 concerné.

L'invention concerne également un logiciel pour la mise en oeuvre du procédé, ce logiciel comprenant des codes d'instructions ou instructions propres à être lus ou stockés sur un support de stockage, lesdits codes étant exécutables par un ordinateur, tel celui destiné à générer des ordres de déplacement pour une machine-outil comprenant plusieurs organes moteurs, ce logiciel étant remarquable en ce qu'il comprend au moins,
. un premier groupe d'étapes opératoires, qui sont mises en oeuvre lors de la construction du plan de commande 8 des organes moteurs 6 de la machine-outil 1, et
. un second groupe d'étapes opératoires, qui sont mises en oeuvre lors de l'utilisation du plan de commande 8 des organes moteurs 6 de la machine-outil 1,
   - ledit premier groupe d'étapes opératoires consistant en un groupe d'étapes au cours desquelles,
      . on créé un code de référence CR pour chaque premier élément 41, ce code de référence CR étant spécifique à chaque premier élément 41 de manière à permettre la distinction des premiers éléments 41 entre eux par la lecture de ce code de référence CR,
      . on constitue un registre de correction 11 dans lequel, à chaque code de référence CR d'un premier élément 41, on associe au moins un groupe 12 d'informations dont au moins certaines,
         .. d'une part, constituent des consignes, dites deuxièmes consignes 120, chacune de correction du déplacement incrémental d'un organe moteur 6 affecté au déplacement du premier élément 41 considéré, en prenant en compte le fait qu'une correction du déplacement incrémental consiste en au moins l'une des deux corrections que sont une correction de vitesse et une correction de position, et,
         .. d'autre part, sont chacune composite à savoir constituée d'au moins une composante 121, 122, 123, 124 ayant chacune une valeur qui est ajustable indépendamment du profil de la pièce 2, la somme de ces composantes 121, 122, 123, 124 constituant la valeur totale de correction de la deuxième consigne 120 concernée,
      . on recherche les tables des pas 10 dont la lecture génère le déplacement d'au moins un premier élément 41, et à chaque instant élémentaire Ti de déplacement de chaque table des pas 10 qui implique un tel premier élément 41, on associe le code de référence CR spécifique à ce premier élément 41,
   - ledit second groupe d'étapes opératoires, consistant en un groupe d'étapes au cours desquelles,
      . lors d'une étape préparatoire située au plus tard juste avant la lecture des tables des pas 10 par le dispositif de commande 7, on choisit et on ajuste la valeur d'au moins une composante 121, 122, 123, 124 d'une deuxième consigne 120 associée à un premier élément 41 concerné par au moins l'une de ces tables des pas 10 et identifiable par son code de référence CR, et
      . lors de la lecture de chaque table des pas 10 par ledit dispositif de commande 7, à chaque instant élémentaire Ti de ladite table de pas 10, on contraint le dispositif de commande 7,
         .. d'une part, à vérifier la présence d'un code de référence CR associé à cet instant élémentaire Ti et, lorsqu'un tel code de référence CR est détecté, à consulter le registre de correction 11 associé à ce code de référence CR pour connaître la valeur d'au moins une composante 121, 122, 123, 124 de la deuxième consigne 120 qui a été prévue,
         .. d'autre part, à déterminer une valeur totale de déplacement incrémental à imposer à l'organe moteur 6 concerné, et ce, en additionnant,
            ...la valeur de la première consigne 1020 qui a été programmée à l'instant élémentaire Ti considéré, et
            ...au moins une fraction prédéterminée M de la valeur d'au moins une composante 121, 122, 123, 124 de la deuxième consigne 120.

L'invention concerne aussi le support de stockage sur lequel est enregistré le logiciel comprenant des codes d'instructions propres à être lus ou stockés sur un support de stockage, lesdits codes étant exécutables par un ordinateur, tel celui destiné à générer des ordres de déplacement pour une machine-outil 1 comprenant plusieurs organes moteurs 2.

L'invention concerne également un dispositif de commande pour machine-outil 1 comprenant
- un ordinateur pour exécuter des codes d'instructions, enregistrés sur un support de stockage,
- des blocs fonctionnels pour, sous contrôle de l'ordinateur,
   . créer un code de référence CR pour chaque premier élément 41, ce code de référence CR étant spécifique à chaque premier élément 41 de manière à permettre la distinction des premiers éléments 41 entre eux par la lecture de ce code de référence CR,
   . constituer un registre de correction 11 dans lequel, à chaque code de référence CR d'un premier élément 41 est associé au moins un groupe 12 d'informations dont au moins certaines,
      .. d'une part, constituent des consignes, dites deuxièmes consignes 120, chacune de correction du déplacement incrémental d'un organe moteur 6 affecté au déplacement du premier élément 41 considéré, en prenant en compte le fait qu'une correction du déplacement incrémental consiste en au moins l'une des deux corrections que sont une correction de vitesse et une correction de position, et,
      .. d'autre part, sont chacune composite à savoir constituée d'au moins une composante 121, 122, 123, 124 ayant chacune une valeur qui est ajustable indépendamment du profil de la pièce 2, la somme de ces composantes 121, 122, 123, 124 constituant la valeur totale de correction de la deuxième consigne 120 concernée,
   . rechercher les tables des pas 10 dont la lecture génère le déplacement d'au moins un premier élément 41, et à chaque instant élémentaire Ti de déplacement de chaque table des pas 10 qui implique un tel premier élément 41, on associe le code de référence CR spécifique à ce premier élément 41,
   . au plus tard juste avant la lecture des tables des pas 10 par le dispositif de commande 7, choisir et ajuster la valeur d'au moins une composante 121, 122, 123, 124 d'une deuxième consigne 120 associée à un premier élément 41 concerné par au moins l'une de ces tables des pas 10 et identifiable par son code de référence CR, et
   . lors de la lecture de chaque table des pas 10 par ledit dispositif de commande 7, à chaque instant élémentaire Ti de ladite table de pas 10, contraindre le dispositif de commande 7,
      .. d'une part, à vérifier la présence d'un code de référence CR associé à cet instant élémentaire Ti et, lorsqu'un tel code de référence CR est détecté, à consulter le registre de correction 11 associé à ce code de référence CR pour connaître la valeur d'au moins une composante 121, 122, 123, 124 de la deuxième consigne 120 qui a été prévue,
      .. d'autre part, à déterminer une valeur totale de déplacement incrémental à imposer à l'organe moteur 6 concerné, et ce, en additionnant,
         ...la valeur de la première consigne 1020 qui a été programmée à l'instant élémentaire Ti considéré, et
         ...au moins une fraction prédéterminée M de la valeur d'au moins une composante 121, 122, 123, 124 de la deuxième consigne 120.

Tous les blocs fonctionnels annoncés ci-dessus n'ont pas été représentés.

Par exemple, on trouve une représentation schématique du bloc fonctionnel qui doit additionner,
- la valeur de la première consigne 1020 qui a été programmée à l'instant élémentaire Ti considéré, et
- au moins une fraction prédéterminée M de la valeur de la deuxième consigne 120.

Sur le dessin ce bloc est représenté par une petite case contenant un signe plus (+).

Egalement, on trouve une représentation schématique du bloc fonctionnel qui doit utiliser le coefficient de modération M pour appliquer la deuxième consigne 120 à l'organe moteur 6 concerné.

## Revendications

1. Procédé de commande des organes moteurs (6) d'une machine-outil (1) permettant la réalisation de pièces (2), cette machine-outil comprenant,
. d'une part, au moins un premier élément (41) capable d'agir sur la pièce (2) à usiner, ce premier élément (41) étant mobile par rapport à au moins un axe (5) déterminé auquel il est associé,
. d'autre part, au moins un organe moteur (6) capable d'engendrer le déplacement de chaque premier élément (41) selon chaque axe (5) auquel il est associé,
chaque organe moteur (6) étant commandé par un dispositif de commande (7) qui exploite au moins une table des pas (10) préalablement établie en fonction du profil de la pièce (2) à usiner,
chaque table des pas (10) étant définie pour une succession d'instants élémentaires (T1) à chacun desquels est associée une première consigne de déplacement incrémental, dite première consigne (1020), qui doit être imposée à l'organe moteur (6), à partir de l'instant élémentaire (Ti) considéré, et dont la valeur est déterminée en fonction du profil ("PP") de la pièce (2) à usiner et des caractéristiques dynamiques ("CD") de la machine-outil (1),
ce procédé étant **caractérisé en ce que** :
- au cours d'un premier groupe d'étapes opératoires,
. on créé un code de référence (CR) pour chaque premier élément (41), ce code de référence (CR) étant spécifique à chaque premier élément (41) de manière à permettre la distinction des premiers éléments (41) entre eux par la lecture de ce code de référence (CR),
. on constitue un registre de correction (11) dans lequel, à chaque code de référence (CR) d'un premier élément (41), on associe au moins un groupe (12) d'informations dont au moins certaines,
.. d'une part, constituent des consignes, dites deuxièmes consignes (120), chacune de correction du déplacement incrémental d'un organe moteur (6) affecté au déplacement du premier élément (41) considéré, en prenant en compte le fait qu'une correction du déplacement incrémental consiste en au moins l'une des deux corrections que sont une correction de vitesse et une correction de position, et,
.. d'autre part, sont chacune composite à savoir constituée d'au moins une composante (121, 122, 123, 124) ayant chacune une valeur qui est ajustable indépendamment du profil de la pièce (2), la somme de ces composantes (121, 122, 123, 124) constituant la valeur totale de correction de la deuxième consigne (120) concernée,
. on recherche les tables des pas (10) dont la lecture génère le déplacement d'au moins un premier élément (41), et à chaque instant élémentaire (Ti) de déplacement de chaque table des pas (10) qui implique un tel premier élément (41), on associe le code de référence (CR) spécifique à ce premier élément (41),
- au cours d'un second groupe d'étapes opératoires,
. lors d'une étape préparatoire située au plus tard juste avant la lecture des tables des pas (10) par le dispositif de commande (7), on choisit et on ajuste la valeur d'au moins une composante (121, 122, 123, 124) d'une deuxième consigne (120) associée à un premier élément (41) concerné par au moins l'une de ces tables des pas (10) et identifiable par son code de référence (CR), et
. lors de la lecture de chaque table des pas (10) par ledit dispositif de commande (7), à chaque instant élémentaire (Ti) de ladite table de pas (10), on contraint le dispositif de commande (7),
.. d'une part, à vérifier la présence d'un code de référence (CR) associé à cet instant élémentaire (Ti) et, lorsqu'un tel code de référence (CR) est détecté, à consulter le registre de correction (11) associé à ce code de référence (CR) pour connaître la valeur d'au moins une composante (121, 122, 123, 124) de la deuxième consigne (120) qui a été prévue,
.. d'autre part, à déterminer une valeur totale de déplacement incrémental à imposer à l'organe moteur (6) concerné, et ce, en additionnant,
...la valeur de la première consigne (1020) qui a été programmée à l'instant élémentaire (Ti) considéré, et
...au moins une fraction prédéterminée (M) de la valeur d'au moins une composante (121, 122, 123, 124) de la deuxième consigne (120).

2. Procédé selon la revendication 1, **caractérisé en ce qu'**on commence par, au cours du premier groupe d'étapes opératoires, rechercher les premiers éléments (41) qui sont susceptibles de requérir une correction de déplacement incrémental selon au moins un axe, et ensuite, on limite les autres étapes opératoires à ceux des premiers éléments (41) qui sont susceptibles de requérir une telle correction de déplacement incrémental.

3. Procédé selon la revendication 1 ou 2, **caractérisé en ce que** pour choisir la valeur d'au moins une composante (121, 122, 123, 124) d'une deuxième consigne (120) associée à un premier élément (41) concerné par au moins l'une des tables des pas (10), on effectue des relevés au cours d'un cycle de fonctionnement de la machine-outil (1), on choisit ladite valeur d'au moins une composante (121, 122, 123, 124) de deuxième consigne (120) à inscrire dans le registre de corrections et on inscrit cette valeur dans le dit registre.

4. Procédé selon la revendication 1 ou 2, **caractérisé en ce que** pour choisir la valeur d'au moins une composante (121, 122, 123, 124) d'une deuxième consigne (120) associée à un premier élément (41) concerné par au moins l'une des tables des pas (10), on réalise des essais préalables de fonctionnement de la machine-outil (1), on choisit ladite valeur d'au moins une composante (121, 122, 123, 124) de deuxième consigne (120) à inscrire dans le registre de corrections et on inscrit cette valeur dans le dit registre.

5. Procédé selon l'une quelconque des revendications 1 à 4, **caractérisé en ce que** :
- au plus tard préalablement à l'utilisation de chaque deuxième consigne (120) destinée à être appliquée à un organe moteur (6) en vue d'effectuer une correction de position,
. on compare la valeur totale de correction à un seuil prédéterminé de déplacement jugé acceptable pour l'organe moteur (6) concerné et,
. lorsque la valeur totale de correction d'une deuxième consigne (120) dépasse ledit seuil acceptable prédéterminé, on définit un coefficient modérateur (M) pour la modération de l'application de cette deuxième consigne (120) par fraction de sa valeur totale de correction, à différents instants élémentaires (Ti) successifs,
. on associe ce coefficient de modération (M) au moins à ladite deuxième consigne (120),
- préalablement à l'utilisation de chaque deuxième consigne (120), on vérifie si elle est associée à un coefficient de modération (M) et, dans l'affirmative, on utilise le coefficient de modération (M) pour appliquer la valeur totale de correction de ladite deuxième consigne (120) à l'organe moteur (6) concerné.

6. Procédé selon l'une quelconque des revendications 1 à 5, **caractérisé en ce qu'**en tant que composantes (121, 122, 123, 124) de la deuxième consigne (120), on considère une variation d'au moins l'une des variables (V1, V2, V3, V4) que sont :
- (V1) la position de l'arête de coupe de l'outil,
- (V2) la position des faces de coupe de l'outil,
- (V3) la position de l'outil sur un support d'outil,
- (V4) la position du support d'outil sur un dispositif de déplacement qui le porte.

7. Procédé selon l'une quelconque des revendications 1 à 6, **caractérisé en ce que** pour calculer la valeur de chaque consigne (120), on procède par addition des différentes composantes (121, 122, 123, 124) qui la constituent.

8. Logiciel pour la mise en oeuvre du procédé selon l'une quelconque des revendications 1 à 7, ce logiciel comprenant des codes d'instructions ou instructions propres à être lus ou stockés sur un support de stockage, lesdits codes étant exécutables par un ordinateur, tel celui destiné à générer des ordres de déplacement pour une machine-outil comprenant plusieurs organes moteurs, ce logiciel étant **caractérisé en ce qu'**il comprend au moins,
. un premier groupe d'étapes opératoires, qui sont mises en oeuvre lors de la construction du plan de commande (8) des organes moteurs (6) de la machine-outil (1), et
. un second groupe d'étapes opératoires, qui sont mises en oeuvre lors de l'utilisation du plan de commande (8) des organes moteurs (6) de la machine-outil (1),
- ledit premier groupe d'étapes opératoires consistant en un groupe d'étapes au cours desquelles,
. on créé un code de référence (CR) pour chaque premier élément (41), ce code de référence (CR) étant spécifique à chaque premier élément (41) de manière à permettre la distinction des premiers éléments (41) entre eux par la lecture de ce code de référence (CR),
. on constitue un registre de correction (11) dans lequel, à chaque code de référence (CR) d'un premier élément (41), on associe au moins un groupe (12) d'informations dont au moins certaines,
.. d'une part, constituent des consignes, dites deuxièmes consignes (120), chacune de correction du déplacement incrémental d'un organe moteur (6) affecté au déplacement du premier élément (41) considéré, en prenant en compte le fait qu'une correction du déplacement incrémental consiste en au moins l'une des deux corrections que sont une correction de vitesse et une correction de position, et,
.. d'autre part, sont chacune composite à savoir constituée d'au moins une composante (121, 122, 123, 124) ayant chacune une valeur qui est ajustable indépendamment du profil de la pièce (2), la somme de ces composantes (121, 122, 123, 124) constituant la valeur totale de correction de la deuxième consigne (120) concernée,
. on recherche les tables des pas (10) dont la lecture génère le déplacement d'au moins un premier élément (41), et à chaque instant élémentaire (Ti) de déplacement de chaque table des pas (10) qui implique un tel premier élément (41), on associe le code de référence (CR) spécifique à ce premier élément (41),
- ledit second groupe d'étapes opératoires, consistant en un groupe d'étapes au cours desquelles,
. lors d'une étape préparatoire située au plus tard juste avant la lecture des tables des pas (10) par le dispositif de commande (7), on choisit et on ajuste la valeur d'au moins une composante (121, 122, 123, 124) d'une deuxième consigne (120) associée à un premier élément (41) concerné par au moins l'une de ces tables des pas (10) et identifiable par son code de référence (CR), et
. lors de la lecture de chaque table des pas (10) par ledit dispositif de commande (7), à chaque instant élémentaire (Ti) de ladite table de pas (10), on contraint le dispositif de commande (7),
.. d'une part, à vérifier la présence d'un code de référence (CR) associé à cet instant élémentaire (Ti) et, lorsqu'un tel code de référence (CR) est détecté, à consulter le registre de correction (11) associé à ce code de référence (CR) pour connaître la valeur d'au moins une composante (121, 122, 123, 124) de la deuxième consigne (120) qui a été prévue,
.. d'autre part, à déterminer une valeur totale de déplacement incrémental à imposer à l'organe moteur (6) concerné, et ce, en additionnant,
...la valeur de la première consigne (1020) qui a été programmée à l'instant élémentaire (Ti) considéré, et
...au moins une fraction prédéterminée (M) de la valeur d'au moins une composante (121, 122, 123, 124) de la deuxième consigne (120).

9. Support de stockage sur lequel est enregistré le logiciel comprenant des codes d'instructions propres à être lus ou stockés sur un support de stockage, lesdits codes étant exécutables par un ordinateur, tel celui destiné à générer des ordres de déplacement pour une machine-outil (1) comprenant plusieurs organes moteurs (2).

10. Dispositif de commande pour machine-outil (1), **caractérisé en ce qu'**il comprend :
- un ordinateur pour exécuter des codes d'instructions, enregistrés sur un support de stockage,
- des blocs fonctionnels pour, sous contrôle de l'ordinateur,
. créer un code de référence (CR) pour chaque premier élément (41), ce code de référence (CR) étant spécifique à chaque premier élément (41) de manière à permettre la distinction des premiers éléments (41) entre eux par la lecture de ce code de référence (CR),
. constituer un registre de correction (11) dans lequel, à chaque code de référence (CR) d'un premier élément (41) est associé au moins un groupe (12) d'informations dont au moins certaines,
.. d'une part, constituent des consignes, dites deuxièmes consignes (120), chacune de correction du déplacement incrémental d'un organe moteur (6) affecté au déplacement du premier élément (41) considéré, en prenant en compte le fait qu'une correction du déplacement incrémental consiste en au moins l'une des deux corrections que sont une correction de vitesse et une correction de position, et,
.. d'autre part, sont chacune composite à savoir constituée d'au moins une composante (121, 122, 123, 124) ayant chacune une valeur qui est ajustable indépendamment du profil de la pièce (2), la somme de ces composantes (121, 122, 123, 124) constituant la valeur totale de correction de la deuxième consigne (120) concernée,
. rechercher les tables des pas (10) dont la lecture génère le déplacement d'au moins un premier élément (41), et à chaque instant élémentaire (Ti) de déplacement de chaque table des pas (10) qui implique un tel premier élément (41), on associe le code de référence (CR) spécifique à ce premier élément (41),
. au plus tard juste avant la lecture des tables des pas (10) par le dispositif de commande (7), choisir et ajuster la valeur d'au moins une composante (121, 122, 123, 124) d'une deuxième consigne (120) associée à un premier élément (41) concerné par au moins l'une de ces tables des pas (10) et identifiable par son code de référence (CR), et
. lors de la lecture de chaque table des pas (10) par ledit dispositif de commande (7), à chaque instant élémentaire (Ti) de ladite table de pas (10), contraindre le dispositif de commande (7),
.. d'une part, à vérifier la présence d'un code de référence (CR) associé à cet instant élémentaire (Ti) et, lorsqu'un tel code de référence (CR) est détecté, à consulter le registre de correction (11) associé à ce code de référence (CR) pour connaître la valeur d'au moins une composante (121, 122, 123, 124) de la deuxième consigne (120) qui a été prévue,
.. d'autre part, à déterminer une valeur totale de déplacement incrémental à imposer à l'organe moteur (6) concerné, et ce, en additionnant,
...la valeur de la première consigne (1020) qui a été programmée à l'instant élémentaire (Ti) considéré, et
...au moins une fraction prédéterminée (M) de la valeur d'au moins une composante (121, 122, 123, 124) de la deuxième consigne (120).

11. Machine-outil **caractérisée en ce qu'**elle comprend un dispositif selon la revendication 10.

## Claims

1. Method of control of motor elements (6) of a machine tool (1) permitting the production of pieces (2), this machine tool comprising,
• on the one hand, at least one first element (41) capable of acting upon the piece (2) to be machined, this first element (41) being movable with respect to at least one predetermined axis (5) to which it is linked,
• on the other hand, at least one motor element (6) able to cause the movement of each first element (41) along each axis (5) to which it is linked,
each motor element (6) being controlled by a control device (7) that uses at least one table of steps (10) established beforehand as a function of the profile of the piece (2) to be machined,
each table of steps (10) being defined for a succession of elementary instants (T1) to each of which a first set point is assigned for incremental displacement, referred to as first set point (1020), which must be imparted to the motor element (6), starting from the elementary instant (Ti) under consideration, and the value of which is determined as a function of the profile (PP) of the piece (2) to be machined and dynamic characteristics (CD) of the machine tool (1),
this method being **characterized in that:**
- in the course of a first set of operational steps,
• a reference code (CR) is created for each first element (41), this reference code (CR) being specific to each first element (41) in such a way as to permit the distinction of first elements (41) from one another through the reading of this reference code (CR),
• a correction register (11) is formed in which linked to each reference code (CR) of a first element (41) is at least one data set (12) of which at least certain data,
•• on the one hand, constitute set points, referred to as second set points (120), each for correction of the incremental movement of a motor element (6) assigned to the movement of the first element (41) under consideration by taking into account the fact that a correction of the incremental movement consists in at least one of two corrections which are a correction of speed and a correction of position, and,
•• on the other hand, are each composite, i.e. are made up of at least one component (121, 122, 123, 124) having in each case a value which is adjustable independently of the profile of the piece (2), the sum of these components (121, 122, 123, 124) constituting the total value of correction of the second set point (120) concerned,
• the tables of steps (10) are searched, the reading of which brings about the movement of at least one first element (41), and, at each elementary instant (Ti) of movement of each table of steps (10) involving such a first element (41), the specific reference code (CR) is linked to this first element (41),
- in the course of a second set of operational steps,
• during a preparatory step situated at the latest before the reading of the tables of steps (10) by the control device (7), the value is selected and adjusted of at least one component (121, 122, 123, 124) of a second set point (120) linked to a first element (41) concerned by at least one of these tables of steps (10) and identifiable by its reference code (CR), and
• during the reading of each table of steps (10) by said control device (7), at each elementary instant (Ti) of said table of steps (10), the control device (7) is forced,
•• on the one hand, to verify the presence of a reference code (CR) linked to this elementary instant (Ti), and, when such a reference code (CR) is detected, to consult the correction register (11) linked to this reference code (CR) in order to know the value of at least one component (121, 122, 123, 124) of the second set point (120) which has been provided for,
•• on the other hand, to determine a total value of incremental movement to be imparted to the motor element (6) concerned, and this by adding up
••• the value of the first set point (1020) which has been programmed at the elementary instant (Ti) under consideration, and
••• at least one predetermined portion (M) of the value of at least one component (121, 122, 123, 124) of the second set point (120).

2. Method according to claim 1, **characterised in that** one begins, during the first set of operational steps, with searching for the first elements (41) which are liable to need a correction of incremental movement along at least one axis, and then, one limits the other operational steps to those of the first elements (41) which are liable to require such a correction of incremental movement.

3. Method according to claim 1 or 2, **characterised in that** to select the value of at least one component (121, 122, 123, 124) of a second set point (120) linked to a first element (41) concerned by at least one of the tables of steps (10), readings are carried out in the course of a cycle of operation of the machine tool (1), said value is selected for at least one component (121, 122, 123, 124) of the second set point (120) to be recorded in the register of corrections and this value is recorded in said register.

4. Method according to claim 1 or 2, **characterised in that** to select the value of at least one component (121, 122, 123, 124) of a second set point (120) linked to a first element (41) concerned by at least one of the tables of steps (10), preliminary trials are made of the functioning of the machine tool (1), said value is selected for at least one component (121, 122, 123, 124) of the set point (120) to be recorded in the register of corrections, and this value is recorded in said register.

5. Method according to any one of the claims 1 to 4, **characterised in that:**
- at the latest before use of each second set point (120) intended to be applied to a motor element (6), with a view to carrying out a correction of position,
• the total value of correction is compared with a predetermined threshold of displacement judged acceptable for the motor element (6) concerned, and
• when the total value of correction of a second set point (120) surpasses said predetermined acceptable threshold, a moderator coefficient (M) is defined for the moderation of the application of this second set point (120) by a portion of its total value of correction, at different successive elementary instants (Ti),
• this moderation coefficient (M) is linked to at least said second set point (120),
- prior to use of each second set point (120), it is verified whether it is linked to a moderation coefficient (M) and, in the affirmative, the moderation coefficient (M) is used to apply the total value of correction of said second set point (120) to the motor element (6) concerned.

6. Method according to any one of the claims 1 to 5, **characterised in that** considered as components (121, 122, 123, 124) of the second set point (120) is a variation of at least one of the variables (V1, V2, V3, V4) which are:
- (V1) the position of the cutting edge of the tool,
- (V2) the position of the cutting faces of the tool,
- (V3) the position of the tool on a tool support,
- (V4) the position of the tool support on a displacement device which bears it.

7. Method according to any one of the claims 1 to 6, **characterised in that** to calculate the value of each set point (120), one proceeds by addition of the different components (121, 122, 123, 124) which constitute it.

8. Software for implementing the method according to any one of the claims 1 to 7, this software comprising codes of instructions or instructions themselves to be read or stored on a storage medium, said codes being able to be executed by a computer, such as that intended to generate displacement commands for a machine tool comprising a plurality of motor elements, this software being **characterised in that** it comprises at least
• a first set of operational steps which are implemented during the construction of the control plan (8) of the motor elements (6) of the machine tool (1), and
• a second set of operational steps which are implemented during use of the control plan (8) of the motor elements (6) of the machine tool (1),
- said first set of operational steps consisting of a set of steps during the course of which,
• a reference code (CR) is created for each first element (41), this reference code (CR) being specific to each first element (41) in such a way as to permit the distinction of first elements (41) from one another through the reading of this reference code (CR),
• a correction register (11) is created in which linked to each reference code (CR) of a first element (41) is at least one set (12) of data of which at least certain data
•• on the one hand, are made up of set points, referred to as second set points (120), each for correction of the incremental movement of a motor element (6) assigned to the movement of the first element (41) under consideration, by taking into account the fact that a correction of the incremental movement consists in at least one of two corrections which are a correction of speed and a correction of position, and,
•• on the other hand, are each composite, i.e. made up of a component (121, 122, 123, 124) having in each case a value which is adjustable independently of the profile of the piece (2), the sum of these components (121, 122, 123, 124) constituting the total value of correction of the second set point (120) concerned,
• the tables of steps (10) are searched, the reading of which generates the movement of at least one first element (41), and at each elementary instant (Ti) of movement of each table of steps (10) involving such a first element (41), the specific reference code (CR) is linked to this first element (41),
- said second set of operational steps, consisting of a set of steps in the course of which
• during a preparatory step situated at the latest just before the reading of the tables of steps (10) by the control device (7), the value is selected and adjusted of at least one component (121, 122, 123, 124) of a second set point (120) linked to a first element (41) concerned by at least one of these tables of steps (10) and identifiable by its reference code (CR), and
• during the reading of each table of steps (10) by said control device (7), at each elementary instant (Ti) of said table of steps (10), the control device (7) is forced
•• on the one hand, to verify the presence of a reference code (CR) linked to this elementary instant (Ti) and, when such a reference code (CR) is detected, to consult the correction register (11) linked to this reference code (CR) in order to know the value of at least one component (121, 122, 123, 124) of the second set point (120) which has been provided for,
•• on the other hand, to determine a total value of incremental movement to be imparted to the motor element (6) concerned, and this by adding
••• the value of the first set point (1020) which has been programmed at the elementary instant (Ti) under consideration, and
••• at least one predetermined portion (M) of the value of at least one component (121, 122, 123, 124) of the second set point (120).

9. Storage medium on which the software is recorded comprising codes of instructions suitable to be read or stored on a storage medium, said codes being able to be executed by a computer, such as one intended to generate displacement commands for a machine tool (1) comprising a plurality of motor elements (2).

10. Control device for a machine tool (1), **characterised in that** it comprises:
- a computer to execute codes of instructions, recorded on a storage medium,
- functional blocks for, under control of the computer,
• creating a reference code (CR) for each first element (41), this reference code (CR) being specific to each first element (41) in such a way as to permit the distinction of first elements (41) from one another through the reading of this reference code (CR),
• creating a correction register (11) in which linked to each reference code (CR) of a first element (41) is at least one set (12) of data of which at least certain data
•• on the one hand, constitute points, referred to as second set points (120), each for correction of the incremental movement of a motor element (6) assigned to the movement of the first element (41) under consideration, by taking into account the fact that a correction of the incremental movement consists in at least one of two corrections which are a correction of speed and a correction of position, and,
•• on the other hand, are each composite, i.e. are made up of at least one component (121, 122, 123, 124) having in each case a value which is adjustable independently of the profile of the piece (2), the sum of these components (121, 122, 123, 124) constituting the total value of correction of the second set point (120) concerned,
• searching the tables of steps (10), the reading of which generates the movement of at least one first element (41), and at each elementary instant (Ti) of displacement of each table of steps (10) involving such a first element (41), linking the specific reference code (CR) to this first element (41),
• at the latest just before the reading of the tables of steps (10) by the control device (7), selecting and adjusting the value of at least one component (121, 122, 123, 124) of a second set point (120) linked to a first element (41) concerned by at least one of these tables of steps (10) and identifiable by its reference code (CR), and
• during the reading of each table of steps (10) by said control device (7), at each elementary instant (Ti) of said table of steps (10), forcing the control device (7),
•• on the one hand, to verify the presence of a reference code (CR) linked to this elementary instant (Ti) and, when such a reference code (CR) is detected, to consult the correction register (11) linked to this reference code (CR) in order to know the value of at least one component (121, 122, 123, 124) of the second set point (120) which has been provided for,
•• on the other hand, to determine a total value of the incremental movement to be imparted to the motor element (6) concerned, and this by adding
••• the value of the first set point (1020) which has been programmed at the elementary instant (Ti) under consideration, and
••• at least one predetermined portion (M) of the value of at least one component (121, 122, 123, 124) of the second set point (120).

11. Machine tool **characterised in that** it comprises a device according to claim 10.

## Patentansprüche

1. Verfahren zur Steuerung von Antriebteilen (6) einer Werkzeugmaschine (1), die es ermöglicht, Werkstücke (2) herzustellen, wobei diese Werkzeugmaschine Folgendes umfasst:
• einerseits mindestens ein erstes Element (41), das dazu in der Lage ist, auf das Werkstück (2), das bearbeitet werden soll, einzuwirken, wobei dieses erste Element (41) im Verhältnis zu mindestens einer bestimmten Achse (5), mit der es verbunden ist, beweglich ist,
• andererseits mindestens ein Antriebteil (6), das dazu in der Lage ist, die Verschiebung jedes ersten Elementes (41) gemäß jeder Achse (5), mit der es verbunden ist, hervorzurufen,
wobei jedes Antriebteil (6) durch eine Steuervorrichtung (7) gesteuert wird, die mindestens eine Schritttabelle (10) nutzt, die je nach dem Profil des Werkstückes (2), das bearbeitet werden soll, im Voraus erstellt wurde,
wobei jede Schritttabelle (10) für ein Folge von elementaren Zeitpunkten (T1) definiert ist, wobei mit jedem dieser ein erster Sollwert zur inkrementellen Verschiebung, genannt erster Sollwert (1020), verbunden ist, der auf das Antriebteil (6) ab dem elementaren Zeitpunkt (Ti), der in Betracht gezogen wird, angewandt werden muss, und dessen Wert je nach dem Profil ("PP") des Werkstückes (2), das bearbeitet werden soll, und den dynamischen Eigenschaften ("CD") der Werkzeugmaschine (1) festgesetzt wird,
wobei dieses Verfahren **dadurch gekennzeichnet ist, dass**:
- während einer ersten Gruppe von Betriebsschritten
• ein Referenzcode (CR) für jedes erste Element (41) geschaffen wird, wobei dieser Referenzcode (CR) für jedes erste Element (41) spezifisch ist, sodass er die Unterscheidung der ersten Elemente (41) untereinander durch die Lektüre dieses Referenzcodes (CR) ermöglicht,
• ein Korrekturregister (11) gebildet wird, in dem jedem Referenzcode (CR) eines ersten Elementes (41) mindestens eine Gruppe (12) von Informationen zugeordnet wird, von denen mindestens Bestimmte
•• einerseits Sollwerte, genannt zweite Sollwerte (120) bilden, jeder zur Korrektur der inkrementellen Verschiebung eines Antriebteils (6), bestimmt zur Verschiebung des ersten Elementes (41), das in Betracht gezogen wird,
wobei die Tatsache berücksichtigt wird, dass eine Korrektur der inkrementellen Verschiebung mindestens eine der zwei Korrekturen umfasst, d.h. eine Korrektur der Geschwindigkeit und eine Korrektur der Position, und
• • anderseits jeweils Verbundstoffe sind, d.h. mindestens einen Bestandteil (121, 122, 123, 124) umfassen, wobei jeder einen Wert aufweist, der unabhängig vom Profil des Werkstückes (2) einstellbar ist, wobei die Summe dieser Bestandteile (121, 122, 123, 124) den Gesamtwert der Korrektur des zweiten Sollwertes (120), der betroffen ist, bildet,
• die Schritttabellen (10) gesucht werden, deren Lektüre die Verschiebung mindestens eines ersten Elementes (41) erzeugt, und bei jedem elementaren Zeitpunkt (Ti) der Verschiebung jeder Schritttabelle (10), die ein derartiges erstes Element (41) umfasst, der spezifische Referenzcode (CR) mit diesem ersten Element (41) verbunden wird,
- im Laufe einer zweiten Gruppe von Betriebsschritten,
• bei einem Vorbereitungsschritt, der spätestens genau vor der Lektüre der Schritttabellen (10) durch die Steuervorrichtung (7) liegt, der Wert mindestens eines Bestandteils (121, 122, 123, 124) eines zweiten Sollwertes (120) ausgewählt und eingestellt wird, der mit einem ersten Element (41), das betroffen ist, durch mindestens eine dieser Schritttabellen (10) verbunden ist und durch seinen Referenzcode (CR) identifizierbar ist, und
• bei der Lektüre jeder Schritttabelle (10) durch die Steuervorrichtung (7) bei jedem elementaren Zeitpunkt (Ti) der Schritttabelle (10) die Steuervorrichtung dazu veranlasst wird,
•• einerseits, die Anwesenheit eines Referenzcodes (CR) zu überprüfen, der mit diesem elementaren Zeitpunkt (Ti) verbunden ist und, wenn ein derartiger Referenzcode (CR) festgestellt wurde, das Korrekturregister (11) zu konsultieren, das mit diesem Referenzcode (CR) verbunden ist, um den Wert mindestens eines Bestandteils (121, 122, 123, 124) des zweiten Sollwertes (120), der vorgesehen wurde, zu kennen,
•• andererseits, einen Gesamtwert der inkrementellen Verschiebung festzusetzen, der dem Antriebteil (6), das betroffen ist, zugewiesen werden soll, und dies bei Hinzufügung
••• des Wertes des ersten Sollwertes (1020), der zum elementaren Zeitpunkt (Ti), der in Betracht gezogen wird, programmiert wurde, und
••• mindestens einer vorherbestimmten Fraktion (M) des Wertes von mindestens einem Bestandteil (121, 122, 123, 124) des zweiten Sollwertes (120).

2. Verfahren nach Anspruch 1, **dadurch gekennzeichnet, dass** im Laufe der ersten Gruppe von Betriebsschritten damit begonnen wird, die ersten Elemente (41) zu suchen, die wahrscheinlich eine Korrektur der inkrementellen Verschiebung gemäß mindestens einer Achse erfordern, und dann werden die anderen Betriebsschritte auf diejenigen der ersten Elemente (41) beschränkt, die wahrscheinlich eine derartige Korrektur der inkrementellen Verschiebung erfordern.

3. Verfahren nach Anspruch 1 oder 2, **dadurch gekennzeichnet dass,** um den Wert von mindestens einem Bestandteil (121, 122, 123, 124) eines zweiten Sollwertes (120), der mit einem ersten Element (41), das betroffen ist, durch mindestens eine der Schritttabellen (10) verbunden ist, auszuwählen, im Laufe eines Betriebszyklus der Werkzeugmaschine (1) Aufzeichnungen durchgeführt werden, der Wert von mindestens einem Bestandteil (121, 122, 123, 124) des zweiten Sollwertes (120), der in das Korrekturregister eingetragen werden soll, ausgewählt wird, und dieser Wert in das Register eingetragen wird.

4. Verfahren nach Anspruch 1 oder 2, **dadurch gekennzeichnet dass,** um den Wert von mindestens einem Bestandteil (121, 122, 123, 124) eines zweiten Sollwertes (120), der mit einem ersten Element (41), das betroffen ist durch mindestens eine der Schritttabellen (10) verbunden ist, auszuwählen, im Voraus Versuche zum Betrieb der Werkzeugmaschine (1) durchgeführt werden, der Wert von mindestens einem Bestandteil (121, 122, 123, 124) des zweiten Sollwertes (120), der in das Korrekturregister eingetragen werden soll, ausgewählt wird und dieser Wert in das Register eingetragen wird.

5. Verfahren nach einem der Ansprüche 1 bis 4, **dadurch gekennzeichnet, dass:**
- spätestens vor der Verwendung jedes zweiten Sollwertes (120), der dazu vorgesehen ist, auf ein Antriebteil (6) angewendet zu werden, um eine Korrektur der Position durchzuführen,
• der Gesamtwert der Korrektur mit einem vorbestimmten Schwellenwert der Verschiebung verglichen wird, der für das Antriebteil (6), das betroffen ist, als akzeptierbar erachtet wird, und
• wenn der Gesamtwert der Korrektur eines zweiten Sollwertes (120) die akzeptierbare Schwelle, die im Voraus festgesetzt wurde, übersteigt, ein Reglerkoeffizient (M) definiert wird, um die Anwendung dieses zweiten Sollwertes (120) durch eine Fraktion seines Gesamtwertes der Korrektur zu verschiedenen aufeinander folgenden elementaren Zeitpunkten (Ti) zu regeln,
• dieser Reglerkoeffizient (M) mit mindestens dem zweiten Sollwert (120) verbunden wird,
- vor der Verwendung jedes zweiten Sollwertes (120) überprüft wird, ob er mit einem Reglerkoeffizienten (M) verbunden ist, und wenn dies der Fall ist, der Reglerkoeffizient (M) verwendet wird, um den Gesamtwert der Korrektur des zweiten Sollwertes (120) auf das Antriebteil (6), das betroffen ist, anzuwenden.

6. Verfahren nach einem der Ansprüche 1 bis 5, **dadurch gekennzeichnet, dass** als Bestandteile (121, 122, 123, 124) des zweiten Sollwertes (120) eine Variation von mindestens einer der Variablen (V1, V2, V3, V4) erachtet wird, d.h.:
- (V1) die Position der Schnittkante des Werkzeuges,
- (V2) die Position der Schnittflächen des Werkzeuges,
- (V3) die Position des Werkzeuges auf einem Werkzeughalter,
- (V4) die Position des Werkzeughalters auf einer Verschiebungsvorrichtung, die ihn trägt.

7. Verfahren nach einem der Ansprüche 1 bis 6, **dadurch gekennzeichnet dass,** um den Wert jedes Sollwertes (120) zu berechnen, die verschiedenen Bestandteile (121, 122, 123, 124), aus denen er besteht, addiert werden.

8. Software zur Durchführung des Verfahrens nach einem der Ansprüche 1 bis 7, wobei diese Software Anweisungscodes oder Anweisungen umfasst, die geeignet sind, um gelesen oder auf einem Speichermedium abgelegt zu werden, wobei die Codes durch einen Computer ausgeführt werden können, so z.B. durch denjenigen, der dazu vorgesehen ist, Verschiebungsanweisungen für eine Werkzeugmaschine zu erzeugen, umfassend mehrere Antriebteile, wobei diese Software **dadurch gekennzeichnet ist, dass** sie mindestens Folgendes umfasst:
• eine erste Gruppe von Betriebsschritten, die bei der Konstruktion der Steuerebene (8) der Antriebteile (6) der Werkzeugmaschine (1) durchgeführt werden, und
• eine zweite Gruppe von Betriebsschritten, die bei der Verwendung der Steuerebene (8) der Antriebteile (6) der Werkzeugmaschine (1) durchgeführt werden,
- wobei die erste Gruppe von Betriebsschritten eine Gruppe von Schritten umfasst, im Laufe derer
• ein Referenzcode (CR) für jedes erste Element (41) geschaffen wird, wobei dieser Referenzcode (CR) für jedes erste Element (41) spezifisch ist, sodass die Unterscheidung der ersten Elemente (41) untereinander durch die Lektüre dieses Referenzcodes (41) ermöglicht wird,
• ein Korrekturregister (11) gebildet wird, in dem jedem Referenzcode (CR) eines ersten Elementes (41) mindestens eine Gruppe (12) von Informationen zugeordnet wird, von denen mindestens Bestimmte
•• einerseits Sollwerte, genannt zweite Sollwerte (120), darstellen, jeder zur Korrektur der inkrementellen Verschiebung eines Antriebteils (6), zugewiesen zur Verschiebung des ersten Elementes (41), das in Betracht gezogen wird, indem die Tatsache berücksichtigt wird, dass eine Korrektur der inkrementellen Verschiebung mindestens eine der zwei Korrekturen umfasst, d.h. eine Korrektur der Geschwindigkeit und eine Korrektur der Position, und
•• anderseits jeweils Verbundstoffe sind, d.h. mindestens einen Bestandteil (121, 122, 123, 124) umfassen, wobei jeder einen Wert aufweist, der unabhängig vom Profil des Werkstückes (2) einstellbar ist, wobei die Summe dieser Bestandteile (121, 122, 123, 124) den Gesamtwert der Korrektur des zweiten Sollwertes (120), der betroffen ist, darstellt,
• die Schritttabellen (10) gesucht werden, deren Lektüre die Verschiebung mindestens eines ersten Elementes (41) erzeugt, und bei jedem elementaren Zeitpunkt (Ti) der Verschiebung jeder Schritttabelle (10), die ein derartiges erstes Element (41) umfasst, der spezifische Referenzcode (CR) mit diesem ersten Element (41) verbunden wird,
- wobei die zweite Gruppe von Betriebsschritten eine Gruppe von Schritten umfasst, im Laufe derer
• bei einem Vorbereitungsschritt, der spätestens genau vor der Lektüre der Schritttabellen (10) durch die Steuervorrichtung (7) liegt, der Wert mindestens eines Bestandteils (121, 122, 123, 124) eines zweiten Sollwertes (120) ausgewählt und eingestellt wird, der mit einem ersten Element (41), das betroffen ist, durch mindestens eine dieser Schritttabellen (10) verbunden ist und durch seinen Referenzcode (CR) identifizierbar ist, und
• bei der Lektüre jeder Schritttabelle (10) durch die Steuervorrichtung (7) bei jedem elementaren Zeitpunkt (Ti) der Schritttabelle (10) die Steuervorrichtung (7) dazu veranlasst wird,
• • einerseits, die Anwesenheit eines Referenzcodes (CR) zu überprüfen, der mit diesem elementaren Zeitpunkt (Ti) verbunden ist und, wenn ein derartiger Referenzcode (CR) festgestellt wurde, das Korrekturregister (11) zu konsultieren, das mit diesem Referenzcode (CR) verbunden ist, um den Wert mindestens eines Bestandteils (121, 122, 123, 124) des zweiten Sollwertes (120), der vorgesehen wurde, zu kennen,
•• andererseits, einen Gesamtwert der inkrementellen Verschiebung festzusetzen, der dem Antriebteil (6), das betroffen ist, zugewiesen werden soll, und dies bei Hinzufügung
••• des Wertes des ersten Sollwertes (1020), der zum elementaren Zeitpunkt (Ti), der in Betracht gezogen wurde, programmiert wurde, und
••• mindestens einer vorherbestimmten Fraktion (M) des Wertes von mindestens einem Bestandteil (121, 122, 123, 124) des zweiten Sollwertes (120).

9. Speichermedium, auf dem die Software aufgezeichnet ist, umfassend Anweisungscodes, die geeignet sind, gelesen oder auf einem Speichermedium abgelegt zu werden, wobei die Codes durch einen Computer ausgeführt werden können, so z.B. durch denjenigen, der dazu vorgesehen ist, Verschiebungsanweisungen für eine Werkzeugmaschine (1) zu erzeugen, umfassend mehrere Antriebteile (2).

10. Steuervorrichtung für eine Werkzeugmaschine (1), **dadurch gekennzeichnet, dass** sie Folgendes umfasst:
- einen Computer, um Anweisungscodes, die auf einem Speichermedium abgelegt sind, auszuführen,
- funktionelle Blöcke, um, unter der Kontrolle des Computers
• einen Referenzcode (CR) für jedes erste Element (41) zu schaffen, wobei dieser Referenzcode (CR) für jedes erste Element (41) spezifisch ist, sodass er die Unterscheidung der ersten Elemente (41) untereinander durch die Lektüre dieses Referenzcodes (CR) ermöglicht,
• ein Korrekturregister (11) zu bilden, in dem jedem Referenzcode (CR) eines ersten Elementes (41) mindestens eine Gruppe (12) von Informationen zugeordnet wird, von denen mindestens Bestimmte
•• einerseits Sollwerte, genannt zweite Sollwerte (120), bilden, jeder zur Korrektur der inkrementellen Verschiebung eines Antriebteils (6), bestimmt zur Verschiebung des ersten Elementes (41), das in Betracht gezogen wird, wobei die Tatsache berücksichtigt wird, dass eine Korrektur der inkrementellen Verschiebung mindestens eine der zwei Korrekturen umfasst, d.h. eine Korrektur der Geschwindigkeit und eine Korrektur der Position, und
•• andererseits jeweils Verbundstoffe sind, d.h. mindestens einen Bestandteil (121, 122, 123, 124) umfassen, wobei jeder einen Wert aufweist, der unabhängig vom Profil des Werkstückes (2) einstellbar ist, wobei die Summe dieser Bestandteile (121, 122, 123, 124) den Gesamtwert der Korrektur des zweiten Sollwertes (120), der betroffen ist, bildet,
• die Schritttabellen (10) zu suchen, deren Lektüre die Verschiebung mindestens eines ersten Elementes (41) erzeugt, und bei jedem elementaren Zeitpunkt (Ti) der Verschiebung jeder Schritttabelle (10), der ein derartiges erstes Element (41) umfasst, der spezifische Referenzcode (CR) für dieses erste Element (41) verbunden wird,
• spätestens genau vor der Lektüre der Schritttabellen (10) durch die Steuervorrichtung (7) den Wert mindestens eines Bestandteils (121, 122, 123, 124) eines zweiten Sollwertes (120) auszuwählen und einzusetzen, der mit einem ersten Element (41), das in Betracht gezogen wird, durch mindestens eine dieser Schritttabellen (10) verbunden ist und durch seinen Referenzcode (CR) identifizierbar ist, und
• bei der Lektüre jeder Schritttabelle (10) durch die Steuervorrichtung (7) bei jedem elementaren Zeitpunkt (Ti) der Schritttabelle (10) die Steuervorrichtung (7) zu veranlassen,
•• einerseits, die Anwesenheit eines Referenzcodes (CR) zu überprüfen, der mit diesem elementaren Zeitpunkt (Ti) verbunden ist und, wenn ein derartiger Referenzcode (CR) festgestellt wird, das Korrekturregister (11) zu konsultieren, das mit diesem Referenzcode (CR) verbunden ist, um den Wert mindestens eines Bestandteils (121, 122, 123, 124) des zweiten Sollwertes (120), der vorgesehen wurde, zu kennen.
•• andererseits, einen Gesamtwert der inkrementellen Verschiebung festzusetzen, der dem Antriebteil (6), das betroffen ist, zugewiesen werden soll, und dies bei Hinzufügung
••• des Wertes des ersten Sollwertes (1020), der zum elementaren Zeitpunkt (Ti), der in Betracht gezogen wurde, programmiert wurde, und
••• mindestens einer vorherbestimmten Fraktion (M) des Wertes von mindestens einem Bestandteil (121, 122, 123, 124) des zweiten Sollwertes (120).

11. Werkzeugmaschine, **dadurch gekennzeichnet, dass** es eine Vorrichtung nach Anspruch 10 umfasst.
